# EUROPÄISCHE PATENTANMELDUNG

(11) **EP 3 971 094 A1**
(43) Veröffentlichungstag der Anmeldung: **23.03.2022**
(21) Anmeldenummer: 20197050.6
(22) Anmeldetag: 18.09.2020
(51) Int. Cl.: B65B 69/00, B65B 55/24, B01D 46/00

(54) **VORICHTUNG ZUM KONTAMINATIONSFREIN AUSTRAG VON RIESELFÄHIGEN STOFFEN MIT HILFE EINES SIEBES**

(71) Anmelder: J. Engelsmann AG, 67059 Ludwigshafen am Rhein (DE)
(72) Erfinder: Kretzu, Christian, 67480 Edenkoben (DE); Liedtke, Joachim, 68163 Mannheim (DE); Quindt, Viktor, 67433 Neustadt an der Weinstrasse (DE)
(74) Vertreter: Sartorius, Peter

(57) **Zusammenfassung**

Die Erfindung bezieht sich auf eine Vorrichtung zum kontaminationsfreien Austrag von rieselfähigen Stoffen mit Hilfe eines Siebs.

Der Erfindung liegt die Aufgabe zugrunde, einen Siebwechsel bei Vorrichtung zum kontaminationsfreien Austrag von rieselfähigen Stoffen mit Hilfe eines Siebs insbesondere bei einer Schütteleinrichtung, derart auszubilden, dass beim Siebwechsel auch die kleinsten Staubbestandteil des zu siebenden Gutes zurückgehalten werden.

Dadurch wird die Aufgabe erfindungsgemäß gelöst:
a) Ein Gehäuse ist mit einem Anschlusselement ausgestattet;
b) das Anschlusselement weist eine Einlassöffnung auf;
über die ein Sieb oder Siebrahmen mit Sieb eingebracht werden kann;
c) die Einlassöffnung ist mit Hilfe eines Foliensacks oder ersten Beutels verschließbar;
d) für einen Siebwechsel kann auf den ersten Beutel ein zweier Beutel aufgebracht werden und mit Hilfe von mindestens einer Dichtung am Anschlusselement abgedichtet werden;
e) die Einlassöffnung ist zusätzlich mit Hilfe eines zweiten Dichtelements abgedichtet, das als Deckel ausgebildet ist;
f) das zweite Dichtelement wird mit Hilfe der Andrückvorrichtung gegen den ersten Beutel gedrückt.

## Beschreibung

Die Erfindung betrifft eine Vorrichtung zum kontaminationsfreien Austrag von rieselfähigen oder schüttfähigen Stoffen mit Hilfe eines Siebs.

Es ist bereits ein Werkzeug DE 000019806932 zum kontaminationsfreien Austrag von rieselförmigen Stoffen bekannt. Eine derartige Vorrichtung ist aus einem Prospekt "Jod-Sorptionsfilter Typ MWS" der Firma Krantz Anlagenbau bekannt. Bei dem darin beschriebenen Jod-Sorptionsfilter muss gewährleistet sein, dass das beladene Sorbens kontaminationsfrei in stabile, transportfähige und lagerfähige Behälter oder Gebinde ausgetragen werden kann. Damit der Behälter sich kontaminationsfrei verschließen lässt, ist eine Überladung des Behälters mit kontaminiertem Staub ausgeschlossen. Des Weiteren muss ein einfaches Erfassen des Füllstands des Transportbehälters möglich sein. Ferner ist bekannt, als Transportbehälter ein stabiles Fass zu verwenden, welches einen Wartungssack aus einem flexiblen Kunststoffmaterial umschließt. Der Wartungssack dient zur kontaminationsfreien Aufnahme des rieselfähigen Stoffs aus dem Vorratsbehälter.

Ferner ist eine Vorrichtung EP 3041 749 B1 zum Umfüllen von Prozessmaterial zwischen einem ersten Behältnis und einem zweiten Behältnis bekannt. Essentielle Bestandteile der Vorrichtung sind zumindest eine Spanneinheit, die einen ersten Spanner und einen zweiten Spanner aufweist, die voneinander unabhängig betätigbar sind, sowie ein schlauchförmiges Linerstück, das sich indirekt zwischen den Behältnissen erstreckt, um den Übergang zwischen den Behältnissen nach außen abzudichten. In der Spanneinheit werden temporär der zugewandte Endabschnitt des Linerstücks und der zugewandte Endabschnitt eines von einem vorherigen Umfüllvorgang stammenden schlauchförmigen Linerrests fixiert. Bei speziellen Anwendungen ist ein Umfüllgerät zwischen die Behältnisse installiert. Das Prozessmaterial kann von sensibler Natur sein - z. B. eine pharmazeutische Komponente - und darf weder von der äußeren Umgebung verunreinigt werden noch in die Umgebung gelangen. Die Behältnisse sind typischerweise Bestandteile einer Produktionsanlage, wie Bigbags, Container oder Fässer.

Der Erfindung liegt die Aufgabe zugrunde, einen Siebwechsel bei Vorrichtung zum kontaminationsfreien Austrag von rieselfähigen Stoffen mit Hilfe eines Siebs insbesondere bei einer Schütteleinrichtung, derart auszubilden, dass beim Siebwechsel auch die kleinsten Staubbestandteile des zu siebenden Gutes zurückgehalten werden.

Die Aufgabe ist durch folgende Merkmale gelöst:
a) ein Gehäuse ist mit einem Anschlusselement ausgestattet;
b) das Anschlusselement weist eine Einlassöffnung auf;
   über die ein Sieb oder Siebrahmen mit Sieb eingebracht werden kann;
c) die Einlassöffnung ist mit Hilfe eines Foliensacks oder ersten Beutels verschließbar;
d) für einen Siebwechsel kann auf den ersten Beutel ein zweier Beutel aufgebracht werden und mit Hilfe von mindestens einer Dichtung am Anschlusselement abgedichtet werden;
e) die Einlassöffnung ist zusätzlich mit Hilfe eines zweiten Dichtelements abgedichtet, das als Deckel ausgebildet ist;
f) das zweite Dichtelement wird mit Hilfe der Andrückvorrichtung gegen den ersten Beutel gedrückt.

Hierzu ist es vorteilhaft, dass die Andrückvorrichtung aus zwei Schraubenbolzen gebildet ist, die an dem Anschlusselement befestigt sind, an denen der Deckel angeschlossen ist und mit deren Hilfe der Deckel gegen zumindest die eine erste Dichtung oder gegen zwei danach angeordnete zweite Dichtung gedrückt wird, wobei die erste Dichtung gegen die zweite Dichtung gepresst wird, die als erster Beutel ausgebildet ist.

Vorteilhaft ist es ferner, dass der Deckel mit zwei Schlitzöffnungen versehen ist, die auf die Schraubenbolzen gesetzt werden und dann mit Hilfe je eines Spannelements gesichert werden können. Mit Hilfe des Spannelements lässt sich der Deckel mit großem Druck gegen den Deckel und den ersten Beutel drücken und erhält damit eine doppelte Abdichtsicherung für die Vorrichtung.

Außerdem ist es vorteilhaft, dass für den Siebwechsel der Deckel entfernt ist und der zweite Beutel auf den ersten Beutel aufgebracht ist. Hierdurch wird eine einwandfreie Montage sichergestellt und gewährleistet, dass keine Staubpartikel in die Umgebungsluft gelangen, da neben der Abdichtung durch die Beutel, die auch den gesamten Siebrahmen bzw. je nach Ausbildung komplett aufnehmen, von einem oder auch von beiden Beuteln umgeben wird, und ferner der Deckel als Abschlussdichtung zusätzlich abdichtet, da er von außen gegen den außenliegenden Beutel gepresst werden kann und dadurch die Abdichtung wesentlich verbessert. Sollten Staubpartikel von den in den Ringnuten aufgenommenen Dichtungen nicht vollständig zurückgehalten werden, kann die Abdichtung auf jeden Fall mit Hilfe des Deckels sichergestellt werden.

Hierzu ist es auch vorteilhaft, dass der erste Beutel mit Hilfe einer Ringdichtung in eine an der Außenseite des Anschlusselements vorgesehenen Ringnut gepresst und abgedichtet ist. Durch die Andrückvorrichtung wird zusätzlich eine einwandfreie Abdichtung sichergestellt.

Nach einem weiteren Merkmal der Erfindung ist es vorteilhaft, dass für den Siebwechsel das Ende des Beutels an der Stirnseite des Anschlusselements umgeklappt und mit Hilfe von Klebeelementen am Beutel befestigt ist. Nach diesem Vorgang kann der erste Beutel in den zweiten Beutel mit dem Sieb eingezogen werden. Mit den Klebestreifen soll das Elastische Dichtelement am Beutelabschnitt befestigt werden, damit es nicht verloren geht bzw. vereinzelt wird.

Vorteilhaft ist es auch, dass für den Siebwechsel das vordere Ende des zweiten Beutels eine Montagehilfe U-förmig umgibt und mit Hilfe einer Dichtung das Ende des Beutels gegen die Montagehilfe gedrückt ist und der zweite Beutel den ersten Beutel vollständig umgibt, sodass dieser von dem Anschlusselement abgezogen und das Sieb in den Beutel eingezogen und auf eine Ablage gelegt werden kann.

Vorteilhaft ist die Vorrichtung für die Montage eines neuen Siebs in das Gehäuseinnere der Vorrichtung durch folgende Merkmale:
Die Montageöffnung ist mit Hilfe des ersten Beutels verschlossen;
auf den Außenumfang des Anschlusselements ist die am zweiten Beutel angeschlossene Montagehilfe angeordnet;
auf den Außenumfang des an das Anschlusselement befestigten ersten Beutels ist die Montagehilfe aufgeschoben und über die Dichtung am Außenumfang des Anschlusselements abgedichtet;
der erste Beutel kann bei dieser Anordnung vom Außenumfang des Anschlusselements abgezogen, im zweiten Beutel abgelegt und das neue Sieb durch die Montageöffnung in das Gehäuseinnere geschoben werden, wobei die Dichtung zur Abdichtung des ersten Beutels aus der ersten Nut gezogen wird und die Dichtung den zweiten Beutel in die Nut dichtend drückt.

Weitere Vorteile und Einzelheiten der Erfindung sind in den Patentansprüchen und in der Beschreibung erläutert und in den Figuren dargestellt.

Dabei zeigen:
Fig. 1 eine Vorrichtung zum Sieben von Schüttgütern oder rieselfähigen Stoffen mit einer Einrichtung in der Ausgangssituation für einen kontaminationsfreien Siebwechsel;
Fig. 2 eine Detailansicht einiger wesentlichen Bauteile;
Fig. 3 das Ende des Beutels wird nach vorne gefaltet und mit Klebestreifen fixiert;
Fig. 4 mit Hilfe einer Montagehilfe wird ein neuer bzw. zweiter Beutel auf das Anschlusselement geschoben;
Fig. 5 die Montagehilfe fixiert den zweiten Beutel staubdicht auf dem Anschlusselement ab,
Fig. 6 der Beutelabschnitt wird von der Montagehilfe in den neuen Beutel gezogen
Fig. 7 die umlaufende Nut ist durch den vorherigen Arbeitsschritt freigeworden und die elastische Dichtung in die umlaufende Nut eingebracht;
Fig. 8 der Siebrahmen wird aus dem Gehäuse gezogen und in den zweiten Beutel gezogen;
Fig. 9 der zweite Beutel wird mit zwei Verschlüssen abgebunden und dazwischen abgetrennt;
Fig.10 der lose Teil des abgetrennten Beutels mit dem darin enthaltenen Siebrahmen wurden entfernt, sodass im nächsten Schritt die Montagehilfe vom Anschlusselement abgezogen und entfernt werden kann;
Fig. 11 das Ende des Beutels wird nach vorne gefaltet und das elastische Dichtelement umschlossen und mit mehreren Klebestreifen mit dem ersten Beutel verbunden;
Fig. 12 mit einer Montagehilfe wird ein neuer bzw. der zweite Beutel auf das Anschlusselement geschoben;
Fig. 13 die Montagehilfe fixiert den zweiten Beutel mit Hilfe einer Dichtung staubdicht auf dem Anschlusselement;
Fig. 14 der erste Beutel mit der Verschlusseinrichtung und das elastische
Dichtelement sind vom Anschlusselement abgezogen;
Fig. 15 die umlaufende Nut ist durch den vorherigen Arbeitsschritt freigeworden und das elastische Dichtelement für den zweiten Beutel in die umlaufende Nut eingebracht;
Fig. 16 der Siebrahmen ist in das Gehäuse 2 eingebracht;
Fig. 17 der zweite Beutel ist mit zwei Verschlüssen abgebunden und der Beutel sowie das elastische Dichtelement, das mit dem Klebestreifen befestigt ist, sind in den neuen Beutel manuell eingebracht.
Fig. 18 der lose Teil des abgetrennten Beutels mit dem darin enthaltenen ersten Beutel und auch Montagehilfe wurden entfernt,
Fig. 19 der Deckel mit seiner Dichtung sind wieder montiert und die Dichtfläche des ersten Beutels dient zusätzlich als Dichtung und beide dichten direkt am Ende der Öffnung bzw. Montageöffnung ab,
   die Vorrichtung ist wieder betriebsfertig.

Weitere Vorteile und Einzelheiten der Erfindung sind in den Patentansprüchen und in der Beschreibung erläutert und in den Figuren dargestellt.

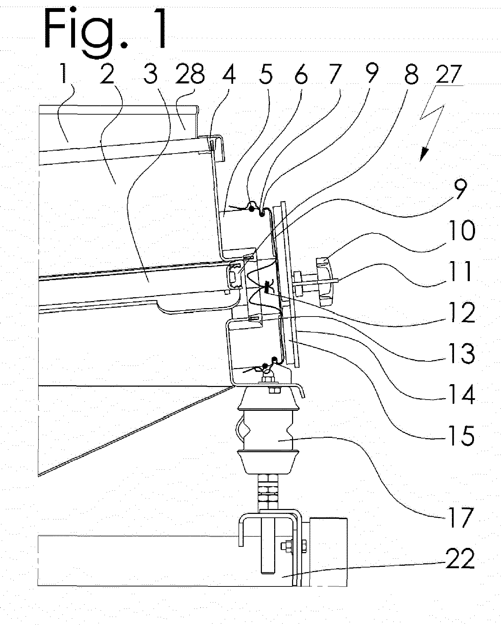

In Fig. 1 ist eine Vorrichtung 27 zum Sieben von Schüttgütern oder rieselfähigen Stoffen mit einer Einrichtung zum kontaminationsfreien Siebwechsel gezeigt.

Die Vorrichtung 27 besteht aus einem Gehäuse 2 in dem ein ein Sieb aufweisender Siebrahmen 3 angeordnet ist, der je nach Wunsch oder bei einem bestimmten Verschmutzungszustand gegen ein neues Sieb bzw. Siebrahmen 3 mit Sieb ausgewechseit werden kann. Das Gehäuse 2 stützt sich mit Hilfe einer elastischen Lagerung 17 auf einem Gestell gemäß Fig.1 ab.

Das Gehäuse 2 weist im oberen Bereich eine Öffnung zur Aufnahme des Schüttgutes auf, die mit Hilfe eines Deckels 28 verschlossen werden kann. Am Außenumfang des Deckels 28 zwischen Deckel 28 und dem Gehäuse 2 ist eine Dichtung 4 vorgesehen, mit deren Hilfe der Deckel 28 gegenüber dem Gehäuse 2 abgedichtet werden kann.

Unterhalb des oberen Deckels 28, etwa im mittleren Bereich der Stirnseite des Gehäuses 2, befindet sich ein rohrförmiges bzw. ovales Anschlusselement 5 mit einer Montageöffnung 31 über der der Siebrahmen 3 mit aufgebrachtem Sieb in das Gehäuse 2 eingebracht oder auch entfernt werden kann, wenn ein Siebwechsel erforderlich ist.

Die Montageöffnung 31 ist derart groß und rechteckförmig ausgebildet, dass der Siebrahmen 3 mit dem Sieb durch die Montageöffnung hindurchgeführt werden kann. Die Montageöffnung 31 wird mit Hilfe eines Deckels 14 verschlossen. Die Abdichtung des Deckels 14 erfolgt über eine Dichtung 15, die zwischen dem Deckel 14 und der Stirnseite bzw. vorderen Ende des Abschlusselements 5 eingebracht ist. Damit eine einwandfreie Abdichtung erzielt wird, befindet sich auf der nach außen gerichteten Stirnfläche, die in etwa der Dichtfläche des Abschlusselements 5 entspricht eine umlaufende ringförmige etwas hervorstehende Dichtfläche bzw. schmale Dichtfläche 25, die als Dichtlippe ausgebildet ist, gegen die die Dichtung 15 gepresst werden kann.

Der auf die Montageöffnung 31 aufbringbare Deckel 14 wird über die Dichtung 15 abgedichtet. Wie aus Fig. 1 ferner hervorgeht, gehört zum Deckel 14 eine Verschlusseinrichtung 12 mit einem Spannelement oder Schraubgriff 10 und einem Griff 11. Zwischen dem Deckel 14 der Montageöffnung 31 ist eine Dichtung 13 vorgesehen, sodass die Montageöffnung 31 kontaminationsfrei abgedichtet werden kann und während des Arbeitseinsatzes keine Partikel nach außen dringen können.

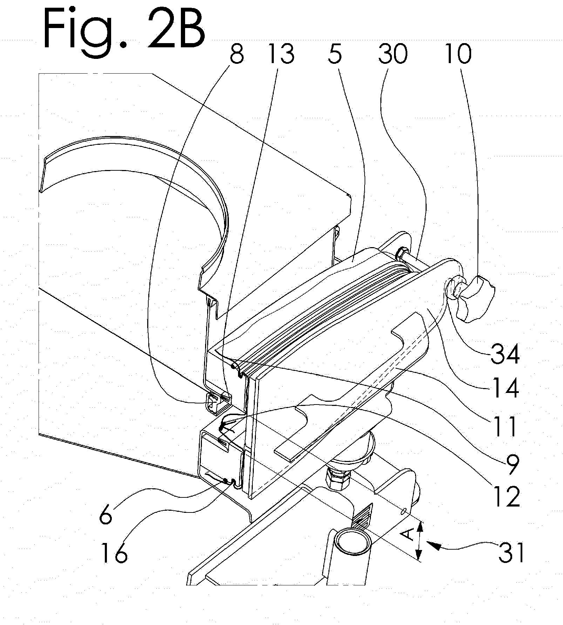

Der Anpressdruck für die Dichtung 15 wird mit Hilfe des Deckels 14 und je einem Spannelement 10 erzielt. Der Deckel 14 weist im Bereich seiner beiden Außenkannten je eine U-förmige nach unten gerichtete schlitzförmige Öffnung 34 (Fig.2b) auf, die von oben auf die an dem Anschlusselement 5 vorgesehenen Schraubbolzen gesetzt werden können. Die beiden Spannelemente 10 werden auf das Gewinde der Schraubenbolzen gedreht und drücken dadurch den Deckel 14 gegen die Oberfläche der Dichtfläche 25 und auch gegen einen Beutel 9, der gemäß Fig. 1 die Öffnung 31 des Abschlusselements 5 und somit den im Inneren der Vorrichtung 27 eingebrachten Siebrahmen 3 so abdichtet, dass keine Partikel aus dem Inneren der Vorrichtung 27 zum Sieben von Schüttgütern nach außen dringen können. Fig. 1 zeigt die Ausgangssituation für einen kontaminationsfreien Siebwechsel, wobei sich der Siebrahmen 3 im Gehäuseinneren der Vorrichtung 27 befindet.

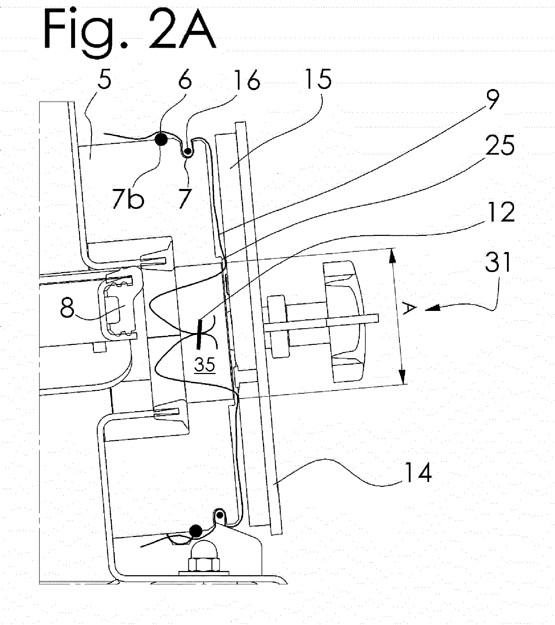

Wie aus Fig. 2A ferner hervorgeht sind am Außenumfang des Abschlusselements zwei nebeneinander angeordnete Ringnuten 7 und 7b vorgesehen, die zur Aufnahme je einer Dichtung, insbesondere Ringdichtungen 6 und 16, dienen. Die Dichtung 6 ist ständig am Außenumfang des Anschlusselements 5 vorgesehen.

Die einzelnen Montageschritte zum Einbringen des Siebrahmens 3 mit aufgebrachten Sieb in das Innere des Gehäuses 2 der Vorrichtung 27 und die Herausnahme des Siebrahmens aus dem Inneren des Gehäuses 2 sind in den Fig. 1 bis 19 veranschaulicht.

Wie bereits erwähnt zeigt Fig. 1 den in das Gehäuse 2 eingebrachten Siebrahmen 3 und damit auch die betriebsfertige Vorrichtung 27, wobei die Schüttelbewegung des Siebrahmens 3 mit Hilfe von in der Zeichnung nicht dargestellten Motoren erfolgt.

Der Siebrahmen 3 besteht aus einem rechteckförmigen Gestell mit dichtend auf dem Siebrahmen aufgebrachtem feinmaschigen Sieb, dessen Sieböffnungen entsprechend des zu siebenden Guts ausgewählt werden. Nach einem längeren Arbeitseinsatz ist es erforderlich, den Siebrahmen auszuwechseln, zu reinigen oder durch einen neuen Siebrahmen zu ersetzten. Bei giftigem Schüttgut muss der Rahmenwechsel kontaminationsfrei erfolgen.

In Fig. 1 befindet sich die Vorrichtung 27 zum Sieben von Schüttgütern oder rieselfähigen Stoffen in der Ausgangssituation d. h. in Betriebsstellung und ist bereit für einen kontaminationsfreien Siebwechsel.

Hierzu ist in der Darstellung gemäß Fig. 2a und 2b das Anschlusselement 5 mit Hilfe der beiden Dichtungen 15 des Deckels 14 und des als Dichtung eingesetzten ersten Beutels 9 abgedichtet, wobei der Beutel 9 die Öffnung 31 des Anschlusselements 5 umgibt und verschließt,

Eine Detailansicht ist in Fig. 2a veranschaulicht, wobei einige wesentliche Vorrichtungsteile in einem größeren Maßstab dargestellt sind. Das Anschlusselement 5 ist mit der Dichtung 15 versehen bzw. abgedichtet und dichtet die Öffnung, nachstehend als Montageöffnung 31 bezeichnet, ab, durch die der Siebrahmen 3 geschoben wird. Der Beutel 9 verschließt die Öffnung bzw. die Montageöffnung 31 des Anschlusselements 5, durch das die Siebrahmen 3 in die Vorrichtung zum Sieben von Schüttgütern 27 ein- bzw. ausgebracht werden kann. Der Beutel 9 wird mit einem elastischen Dichtelement 16 gehalten, das als Dichtring ausgebildet ist. Das elastische Dichtelement 16 wird in der umlaufenden Nut 7 aufgenommen.

Die Dichtfläche 25 (Fig. 2a) und die Dichtung 15 dichten direkt am Ende des Anschlusselements 5 die Öffnung 31 ab, um Staub des Schüttguts aus dem Inneren der Vorrichtung 27 zum Sieben von Schüttgütern im Bereich zwischen Beutel 9 und Anschlusselement 5 und insbesondere aus der umlaufenden Nut 7 fernzuhalten. Die Dichtfläche 25 erhöht die Flächenpressung im abzudichtenden Bereich erheblich eine kleine Erhöhung auf der Dichtfläche 25, die als Dichtlippe ausgebildet ist. Dadurch werden eventuelle Falten des Beutels 23 bzw. Beutel 9 verpresst und staubdicht.

Eine weitere Dichtung 8, die als Ringdichtung ausgebildet ist und den Siebrand umgibt, dient dazu, den Siebrahmen 3 gegenüber dem inneren Teil des Gehäuses 2 im abzudichten. Das ist erforderlich, um zu gewährleisten, dass kein Schüttgut den Siebrahmen umgeht und über den Bereich seiner Außenkante verlässt und somit die Qualität der Siebung beeinträchtigt wäre.

Fig. 2a zeigt den Deckel 14, an dem auch die Dichtung 15 befestigt ist. Er ist mit Hilfe der beiden Schlitzöffnungen 34 auf die Gewindebolzen 30 gesetzt und wird durch die Spannelemente 10 an das Anschlusselement 5 gepresst.

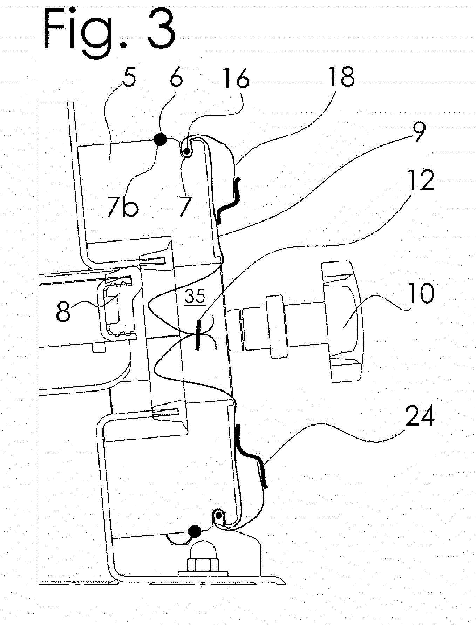

Wird gemäß Fig. 3 das Spannelement 10 gelöst und der Deckel 14 mit Dichtung 15 entfernt, kann ein Ende 18 des Beutels 9 nach vorne gefaltet werden. Mit Hilfe des elastischen Dichtelements 16 in der umlaufenden Nut wird das vordere Ende des Beutels 9 dichtend gehalten und durch mehrere Klebestreifen 24 mit dem vorderen Ende des Beutels 9 verbunden.

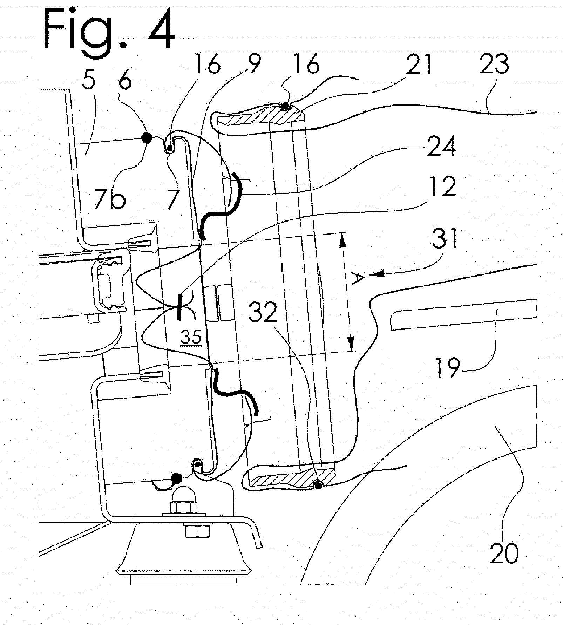

Jetzt kann gemäß Fig. 4 mit Hilfe einer rohr- und ellipsenförmigen Montagehilfe 21 ein neuer bzw. zweiter Beutel 23 mit darin enthaltenen Siebrahmen 3 auf das Anschlusselement 5 geschoben werden, der den am vorderen Ende des Anschlusselements 5 fixierten alten Beutel 9 umgibt,

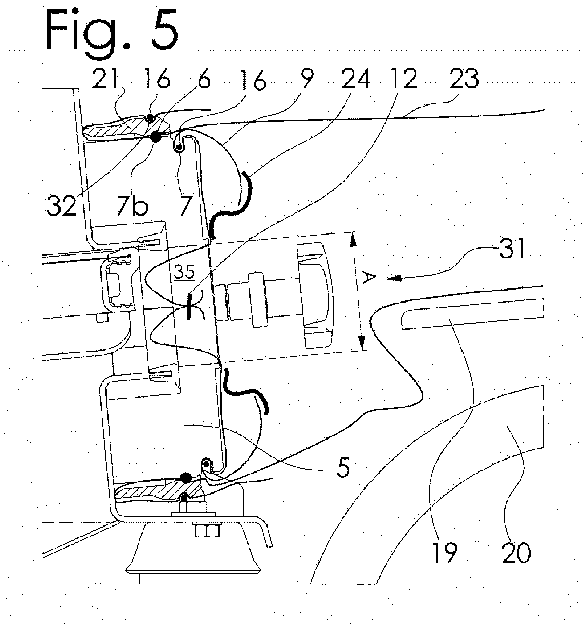

Der neue Beutel 23 ist gemäß Fig. 5 mit Hilfe der Dichtung 6 und 16, die als Ringdichtungen ausgebildet sind, am vorderen Ende des Anschlusselements 5 dichtend gesichert. Die Dichtung 16 drückt das vordere Ende des ersten Beutels 9 in die Nut 7 am Anschlusselement 5. Der erste Beutel 9 befindet sich somit zum Teil im neuen Beutel 23. Die Montagehilfe 21 fixiert auf diese Weise den Beutel 23 staubdicht auf dem Anschlusselement 5. Das vordere Ende des zweiten Beutels 23 ist gemäß Fig.5 um die Montagehilfe 21 herumgeführt, und drückt die Dichtung 6 auf die Außenoberfläche des Anschlusselements 5 in die Nut 7b. Die Dichtung 6 dichtet das Anschlusselement 5 gegenüber dem neuen Beutel 23 ab. Eine weitere Dichtung 16 bzw. Ringdichtung liegt in einer Vertiefung oder Ringnut 32 am Außenumfang der Montaghilfe 21 und dichtet den zweiten Beutel 23 ebenfalls nach außen ab.

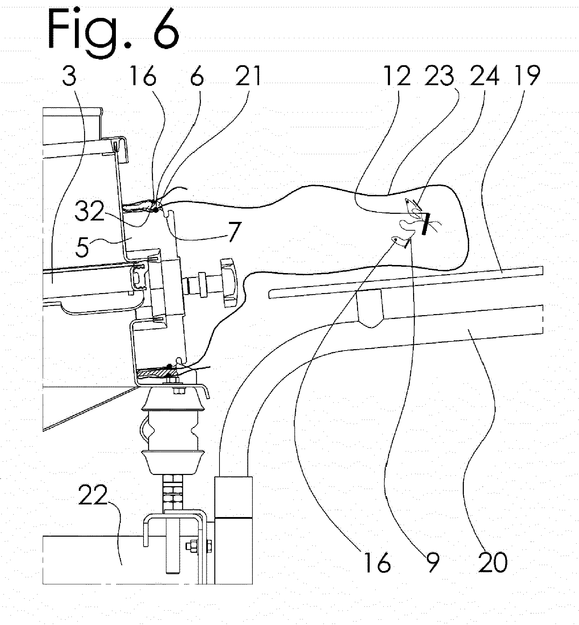

Der Beutelabschnitt 9 ist von der Montagehilfe 5 abgezogen und in den zweiten Beutel 23 abgelegt (Fig.6.). Die umlaufende Nut 7, die durch den vorherigen Arbeitsschritt freigeworden ist, ermöglicht nun, dass das elastische Dichtelement 16 in die umlaufende Nut 7 eingebracht werden kann wobei das elastische Dichtelement 6 von der Montagehilfe 21 abgestreift wird.

Aus den Fig. 5, 6, 7 geht hervor, wie der Beutel 9 mit Verschluss 12 und der elastische Dichtung 6, die mit Klebestreifen 24 befestigt war, vom Anschlusselement 5 abgezogen und der Beutel 9 mit der Dichtung 16 und dem Verschlusselement 12 manuell in den zweiten Beutel 23 gezogen worden ist. In Fig. 6,7, 8 sind diese Teile als Knäuel dargestellt. Der erste Beutel 9 verbleibt nun im zweiten Beutel 23.

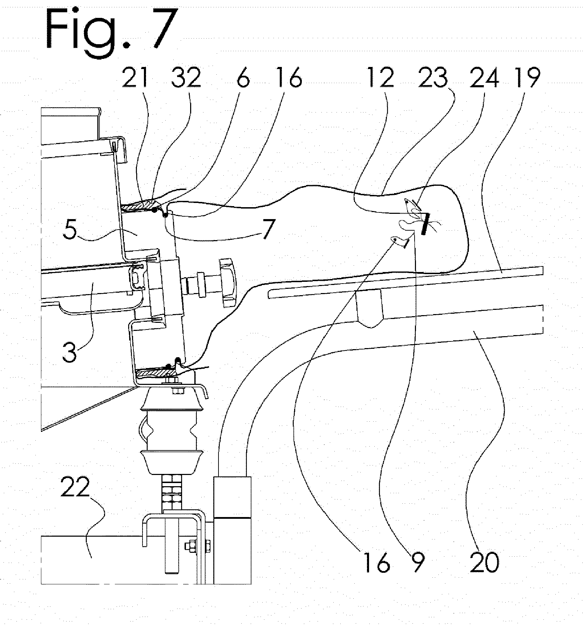

Wie Fig. 7 zeigt, kann der Beutel 23 auf einer Ablage 19 zur Erleichterung des Ausbaus des Siebrahmens 3 abgelegt werden. Die Ablage 19 ist an einem Gestell 20 befestigt, das mit einem Grundrahmen 22 der Vorrichtung 27 verbunden ist.

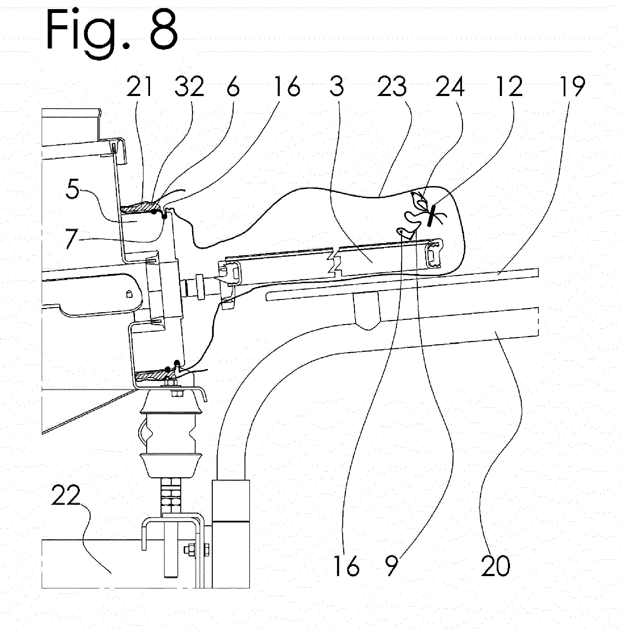

Gemäß Fig. 8 wird der Siebrahmen 3 manuell aus dem Gehäuse 2 gezogen und in den Beutel 23 gebracht, wobei der Siebrahmen auf der Ablagefläche 19 gelagert ist.

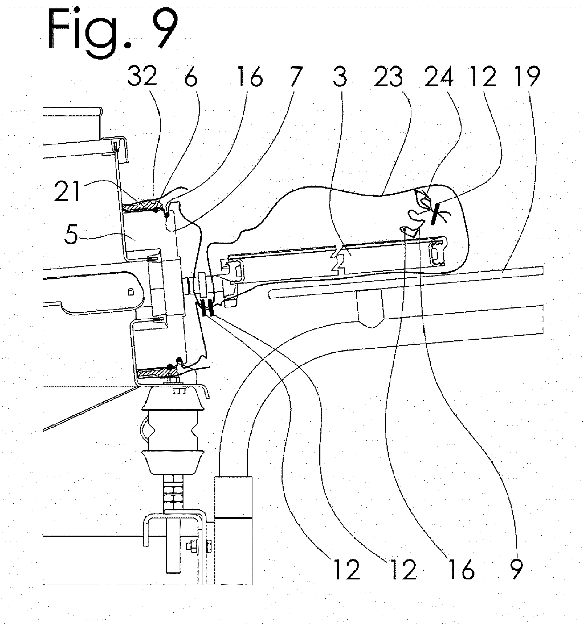

Nun kann gemäß Fig. 9 der Beutel 23 mit zwei Verschlüssen 12 abgebunden und der Siebrahmen 3 in dem Beutel 23 auf der Ablagefläche 19 abgelegt werden und ist somit kontaminationsfrei eingeschlossen.

Der Beutel 9, sowie das elastische Dichtelement 16, das mit dem Klebestreifen 24 befestigt ist, ist im Beutel 23 kontaminationsfrei eingeschlossen. Anschließend kann im nächsten Schritt der Beutel 23 zwischen den Verschlüssen 12 durchtrennt und entsorgt werden. Die Demontage des Siebrahmens 3 aus dem Gehäuseinnern der Vorrichtung 27 ist damit kontaminationsfrei abgeschlossen.

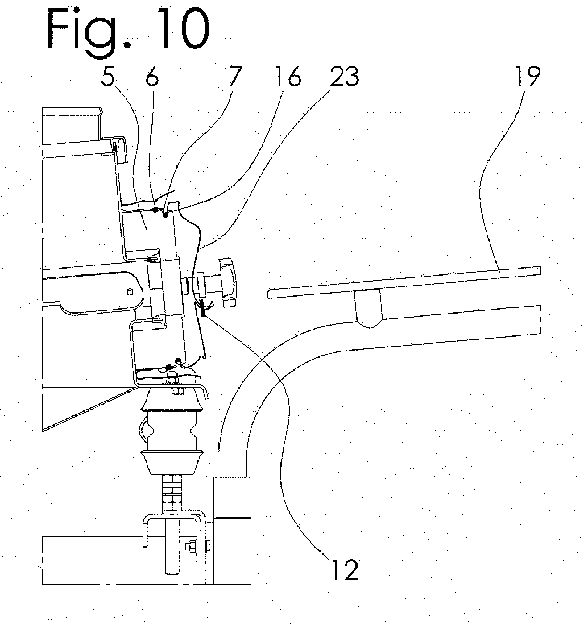

In den nachfolgenden Fig. 10 bis 19 wird die Montage eines neuen Siebs bzw. am Siebrahmen 3 angebrachtem Sieb gezeigt.

Fig. 10 zeigt den losen Teil des abgetrennten Beutels 23, des zuvor darin enthaltenen Siebrahmen 3, der jetzt entfernt wurde. Für die Montage eines neuen Siebs wurde die Montagehilfe 21 vom Anschlusselement 5 abgezogen und entfernt.

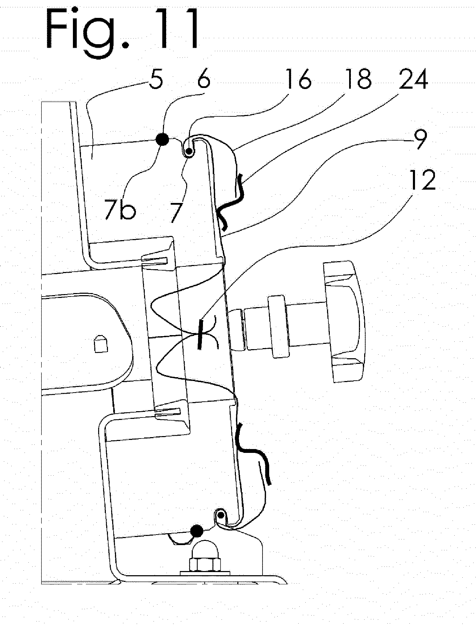

Fig. 11 zeigt das Ende 18 des Beutels 9, bzw. den Rest-Beutel 23, dessen Ende nach vorne gefaltet wird und dann mittels des elastischen Dichtelements 16 und mit mehreren Klebestreifen 24 mit dem Beutel 9 verbunden wird. Hierdurch wird sichergestellt, dass das Innere des Gehäuses 2 der Vorrichtung vollständig abgedichtet ist.

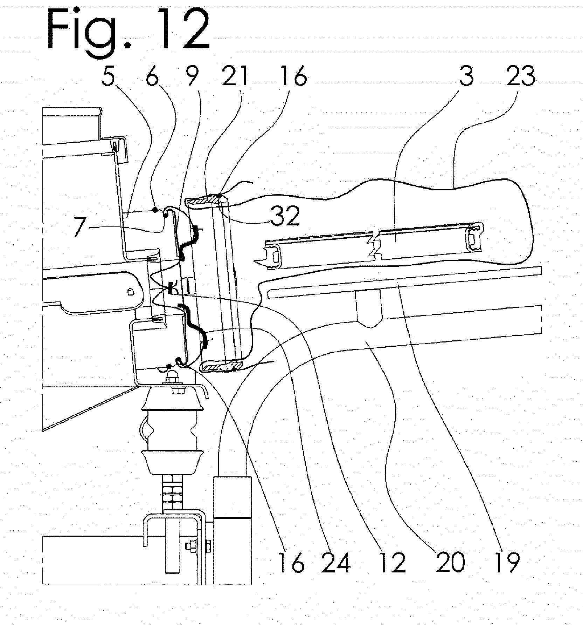

Fig. 12 zeigt die Montagehilfe 21 mit der ein neuer bzw. zweiter Beutel 23 mit darin befindlichen Siebrahmen 3, auf das Anschlusselement 5 geschoben wird. Danach kann der neue Beutel 23 mit dem elastischen Dichtelement 16 auf dem Anschlusselement 5 befestigt werden. Der in dem Beutel 23 vorgesehene neue Siebrahmen 3 kann nun in die Vorrichtung 27 zum Sieben von Schüttgütern eingebracht werden.

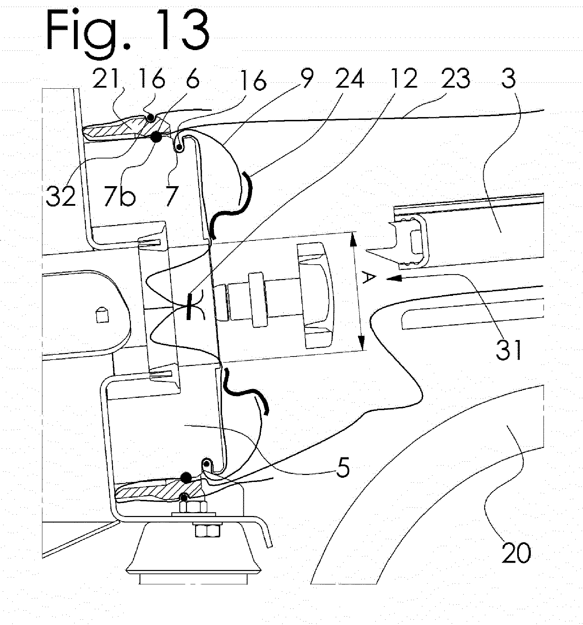

Fig. 13 zeigt die Montagehilfe 21 und wie der Beutel 23 staubdicht auf dem Anschlusselement 5 fixiert ist. Durch die spezielle Form und entsprechende Maßhaltigkeit dichtet die Dichtung 6 den Beutel 23 auf dem Anschlusselement 5 ab.

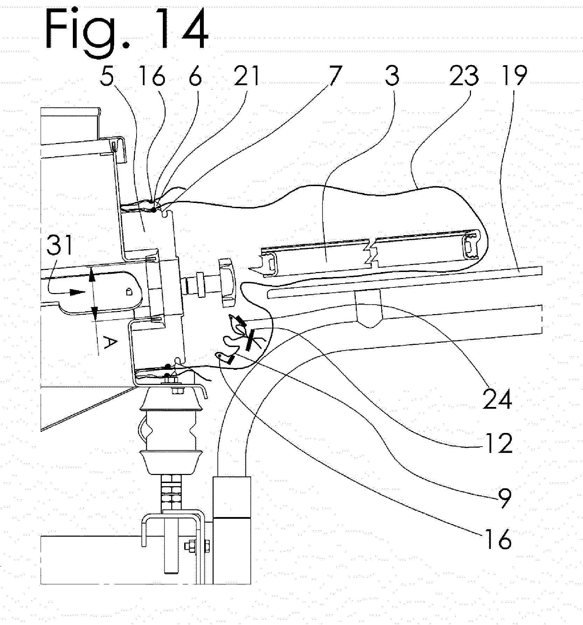

Fig. 14 zeigt, dass der innen liegende Beutel 9 mit Verschlusseinrichtung 12 und dem elastischen Dichtelement 16, das mit Klebestreifen 24 befestigt wurde, vom Anschlusselement 5 abgezogen und in den Beutel 23 gebracht wurde. Hierdurch wird die Öffnung 31 freigegeben und der Siebrahmens 3 kann in das Gehäuseinnere der Vorrichtung 27 geschoben werden.

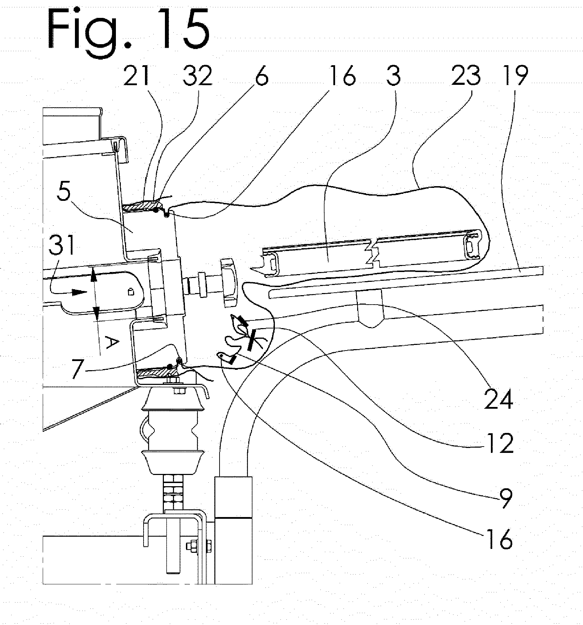

Gemäß Fig. 15 ist die umlaufende Nut 7 durch den vorherigen Arbeitsschritt freigeworden, sodass jetzt das elastische Dichtelement 16 in die umlaufende Nut 7 eingebracht und hierzu das elastische Dichtelement 16 von der Montagehilfe 21 abgestreift wird. Der Beutel befindet sich nun zusammengedrückt als Knäuel im Inneren des Beutels 23.

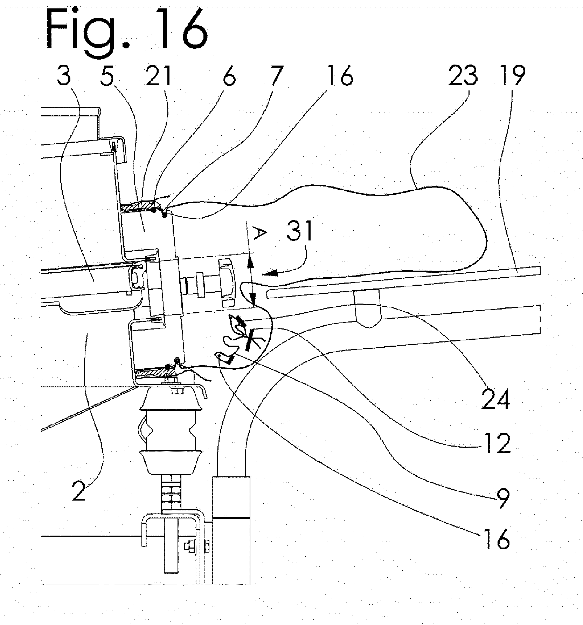

Gemäß Fig. 16 ist nach Entfernen des Beutels 9 die Öffnung bzw. die Montageöffnung 31 freigelegt und der Siebrahmen 3 kann in das Gehäuse 2 eingebracht werden.

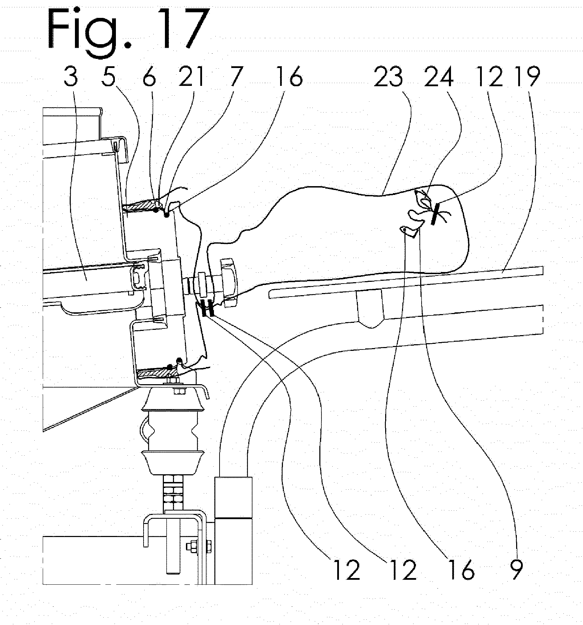

Wie Fig. 17 zeigt, kann nun der Beutel 23 mit zwei Verschlüssen 12 abgebunden werden, wobei der Beutel 23, sowie das elastische Dichtelement 16, das mit dem Klebestreifen 24 befestigt war, zuvor von dem Abschlusselement 5 abgenommen worden war. Hierdurch wird der Beutel 23 mittels Verschlusseinrichtung 12 abgeschlossen und von dem am Anschlusselement 5 befindlichen Restbeutel getrennt, der ebenfalls mittels Verschlusseinrichtung 12 verschlossen wird. Der in das Gehäuseinnere eingebrachte Siebrahmen 3 ist nun kontaminationsfrei abgedichtet. Die Montage des neuen Siebrahmens 3 ist damit abgeschlossen.

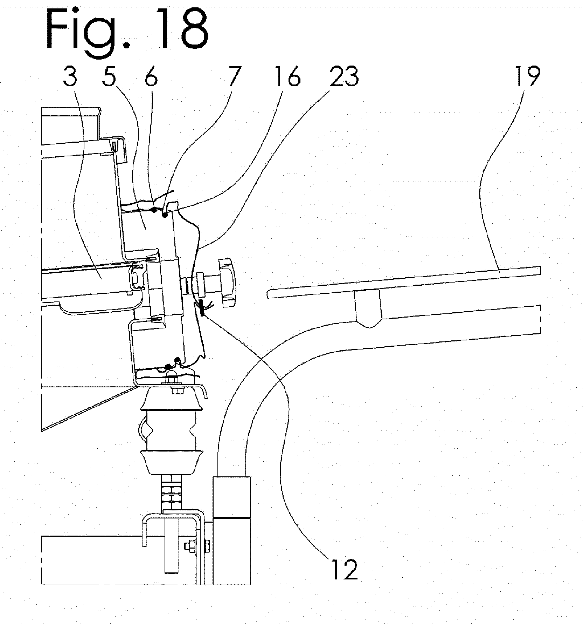

Nachdem der Beutel 23 zwischen den Verschlüssen 12 durchtrennt worden ist, kann dieser mit dem alten Beutel 9 gemäß Fig. 18 entsorgt werden. Hierzu wird der lose Teil des abgetrennten Beutels 23 mit dem darin enthaltenen Beutel 9 entfernt, sodass im nächsten Schritt die Montagehilfe 21 vom Anschlusselement 5 abgezogen und entfernt werden kann.

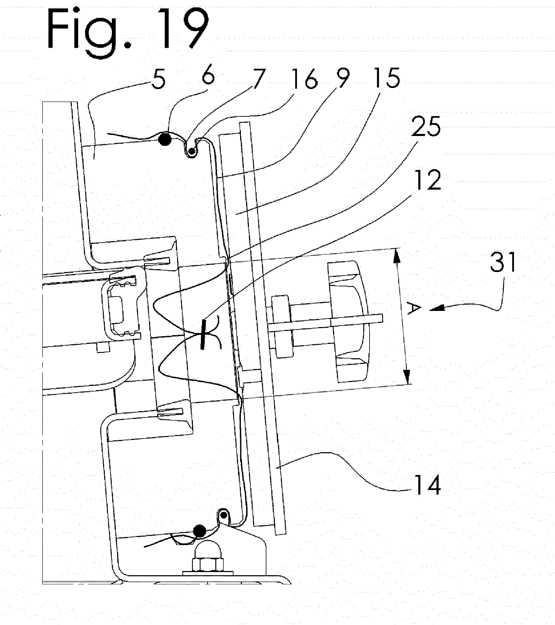

Gemäß Fig. 19 wird zum Abschluss der Deckel 14 mit der Dichtung 15 wieder montiert. Die Dichtfläche 25 und die Dichtung 15 dichten direkt am Ende der Öffnung 31 ab, um Staub aus dem Inneren der Vorrichtung zum Sieben von Schüttgütern 27 im Bereich zwischen Beutel 9 und Anschlusselement 5 und insbesondere der umlaufenden Nut 7 fern zu halten.

Die Dichtfläche 25 mit hervorstehender Dichtlippe erhöht erheblich die Flächenpressung im abzudichtenden Bereich. Dadurch werden eventuelle Falten der Beutel 23 bzw. 9 verpresst und staubdicht. Hierdurch wird eine Kontamination der umlaufenden Nut 7 vermieden. Es ist wichtig, dass die umlaufende Nut möglichst frei von Produktstaub bleibt, da dieser sonst nach außen dringen könnte. Der kontaminationsfreie Wechsel des Siebrahmens 3 ist damit abgeschlossen und die Vorrichtung 27 zum Sieben von Schüttgütern betriebsbereit.

### Bezugszeichenliste

- 1: Dichtung
- 2: Gehäuse
- 3: Siebrahmen
- 4: Dichtung
- 5: Anschlusselement = Gehäuse
- 6: Dichtung
- 7: umlaufende Nut
- 8: Dichtung
- 9: Beutel
- 10: Spannelement (Schraubgriff)
- 11: Griff
- 12: Verschlusseinrichtung
- 13: Dichtung
- 14: Deckel
- 15: Dichtung
- 16: Dichtung, Ringdichtung
- 17: elastische Lagerung
- 18: Ende des Beutels
- 19: Ablage
- 20: Gestell der Ablagefläche
- 21: ellipsenförmige Montagehilfe
- 22: elastisches Band (O-Ring)
- 23: Beutel (komplett)
- 24: Klebestreifen
- 25: Dichtfläche
- 27: Vorrichtung zum Sieben von Schüttgütern
- 28: Deckel
- 30: Schraubenbolzen
- 31: Öffnung = Montageöffnung
- 32: Umlaufende Nut (Montagehilfe Teil 21)
- 34: Schlitzöffnung
- 35: Raum

## Patentansprüche

1. Vorrichtung zum kontaminationsfreien Austrag von rieselfähigen oder schüttfähigen Stoffen mit Hilfe eines Siebs,
**gekennzeichnet durch folgende Merkmale:**
a) ein Gehäuse (2) ist mit einem Anschlusselement (5) ausgestattet;
b) das Anschlusselement (5) weist eine Einlassöffnung (31) auf;
über die ein Sieb oder Siebrahmen (3) mit Sieb eingebracht werden kann;
c) die Einlassöffnung (31) ist mit Hilfe eines Foliensacks oder ersten Beutels (9) verschließbar;
d) für einen Siebwechsel kann auf den ersten Beutel (9) ein zweiter Beutel (23) aufgebracht werden und mit Hilfe von mindestens einer Dichtung (6) am Anschlusselement (5) abgedichtet werden;
e) die Einlassöffnung (31) ist zusätzlich mit Hilfe eines zweiten Dichtelements abgedichtet, das als Deckel (14) ausgebildet ist;
f) das zweite Dichtelement wird mit Hilfe der Andrückvorrichtung gegen den ersten Beutel (9) gedrückt.

2. Vorrichtung nach Anspruch 1,
**dadurch gekennzeichnet,**
**dass** die Andrückvorrichtung aus zwei Schraubenbolzen (30) gebildet ist, die an dem Anschlusselement (5) befestigt sind, an denen der Deckel (14) angeschlossen ist und mit deren Hilfe der Deckel (14) gegen zumindest eine erste Dichtung (15) oder gegen zwei danach angeordnete Dichtungen gedrückt wird, wobei die erste Dichtung (15) gegen die zweite Dichtung gepresst wird, die als erster Beutel (9) ausgebildet ist.

3. Vorrichtung nach Anspruch 1 oder 2,
**dadurch gekennzeichnet,**
**dass** der Deckel (14) mit zwei Schlitzöffnungen (34) versehen ist, die auf die Schraubenbolzen gesetzt werden und dann mit Hilfe je eines Spannelements (10) gesichert werden können.

4. Vorrichtung nach einem der vorhergehenden Ansprüche
**dadurch gekennzeichnet,**
**dass** für den Siebwechsel der Deckel (14) entfernt ist und der zweite Beutel (23) auf den ersten Beutel (9) aufgebracht ist.

5. Vorrichtung nach einem der vorhergehenden Ansprüche
**dadurch gekennzeichnet,**
**dass** der erste Beutel (9) mit Hilfe einer Ringdichtung (16) in eine an der Außenseite des Anschlusselements (5) vorgesehenen Ringnut gepresst und abgedichtet ist.

6. Vorrichtung nach einem der vorhergehenden Ansprüche
**dadurch gekennzeichnet,**
**dass** für den Siebwechsel das Ende (18) des Beutels (9) an der Stirnseite des Anschlusselements (5) umgeklappt und mit Hilfe von Klebeelementen 24 am Beutel (9) befestigt ist.

7. Vorrichtung nach einem der vorhergehenden Ansprüche
**dadurch gekennzeichnet,**
**dass** für den Siebwechsel das vordere Ende des zweiten Beutels (23) eine Montagehilfe (21) U-förmig umgibt und mit Hilfe einer Dichtung (16) das Ende des Beutels gegen die Montagehilfe (21) gedrückt ist und der zweite Beutel (23) den ersten Beutel (9) vollständig umgibt, sodass dieser von dem Anschlusselement (5) abgezogen und das Sieb in den Beutel 23 eingezogen und auf eine Ablage (19) gelegt werden kann.

8. Vorrichtung nach einem der vorhergehenden Ansprüche
**gekennzeichnet durch** folgende Merkmale für die Montage eines neuen Siebs in das Gehäuseinnere einer Vorrichtung (27),
a) die Montageöffnung (31) ist mit Hilfe des ersten Beutels (9) verschlossen;
b) auf den Außenumfang des Anschlusselements (5) ist die am zweiten Beutel (23) angeschlossene Montagehilfe (21) angeordnet,
c) auf den Außenumfang des an das Anschlusselement (5) befestigten ersten Beutels (9) ist die Montagehilfe (21) aufgeschoben und über die Dichtung (16) am Außenumfang des Anschlusselement (5) abgedichtet;
d) der erste Beutel (9) kann bei dieser Anordnung vom Außenumfang des Anschlusselements (5) abgezogen, im zweiten Beutel (23) abgelegt und das neue Sieb **durch** die Montageöffnung (31) in das Gehäuseinnere geschoben werden, wobei die Dichtung zur Abdichtung des ersten Beutels (9) aus der einer ersten Nut (7) herausgezogen wird und die Dichtung den zweiten Beutel (23) in die Nut (7) dichtend eindrückt.
